# EUROPEAN PATENT APPLICATION

(11) **EP 3 708 418 A1**
(43) Date of publication of application: **16.09.2020**
(21) Application number: 19163071.4
(22) Date of filing: 15.03.2019
(51) Int. Cl.: B60N 2/02, B60N 2/06, B60N 2/07

(54) **ELECTRIC DRIVE MECHANISM OF SEAT RAIL**

(71) Applicant: Hsin Chong Machinery Works Co. Ltd., Taoyuan City 335 (TW); Fuzhou Mingfang Automobile Parts Industry Co Ltd., Fuzhou (CN)
(72) Inventor: Hsi, Jeffery Chung-Chiang, 335 Taoyuan City (TW); Lee, Yu Ching, 335 Taoyuan City (TW); Gao, Jie, 335 Taoyuan City (TW); Xie, Jin Zhou, 335 Taoyuan City (TW); Lin, Xing He, 335 Taoyuan City (TW)
(74) Representative: Patentanwälte Bals & Vogel

(57) **Abstract**

An electric drive mechanism of a seat rail includes a front frame (1b), a rear frame (1a), a gear assembly (5), a lead screw (3) and a bumper (2). The front frame (1b) and rear frame (1a) are separated from each other and fixed to an outer rail (8b) of a slide rail (800); the lead screw (3) is spanned across the front frame (1b) and rear frame (1a); the gear assembly (5) driven by a driving device (7) is fixed to an inner rail (8a) of the slide rail (800) and engaged with the lead screw (3); the bumper (2) is installed at the rear frame (1a) to provide a buffering effect between the gear assembly (5) and the rear frame (1a), so as to prevent the production of abnormal sounds caused by colliding the gear assembly (5) with the rear frame (1a) directly.

## Description

### BACKGROUND OF THE INVENTION

### 1. Technical Field

The technical field relates to a slide rail, and more particularly to an electric drive mechanism of a seat rail capable of preventing the production of abnormal sounds effectively.

### 2. Description of Related Art

To adjust the position of a seat in a car, a seat rail is usually installed between the seat and a car body and capable of sliding back and forth. The seat rail comprises two parallel side rails with an interval apart from each other, and each slide rail includes an outer rail fixed to the car body and an inner rail slidably coupled to the outer rail, and the seat is mounted onto the inner rail.

To control the inner rail to slide with respect to the outer rail, an electric rail has been introduced to the market, wherein a driver is used to drive the inner rail to slide and move with respect to the outer rail.

However, when the conventional electric rail drives the inner rail to slide to a dead point of a stroke, a tall and big user may slide the seat all the way to the bottom towards the rear of the car, and a knocking sound may occur since adjacent objects may collide with each other, and this issue has been criticized for a long time, especially when such abnormal sound occurs in a high-end luxury car.

### SUMMARY OF THE INVENTION

Therefore, it is a primary object of this disclosure to overcome the drawbacks of the prior art by providing an electric drive mechanism of a seat rail capable of preventing the production of abnormal sounds effectively.

To achieve the aforementioned and other objectives, this disclosure provides an electric drive mechanism of a seat rail, and the electric drive mechanism is installed between an inner rail and an outer rail of the slide rail and driven by a driving device, and the electric drive mechanism comprises: a front frame and a rear frame, disposed apart from each other and fixed to the outer rail; a lead screw, fixed and spanned between the front frame and the rear frame; a gear assembly, fixed to the inner rail and driven by the driving device, and engaged to the lead screw; and a bumper, selectively installed at one of the gear assembly and the rear frame; wherein, the bumper provides a buffering effect between the gear assembly and the rear frame to prevent the production of abnormal sounds.

Compared with the prior art, this disclosure has the following effect. An adjustment of sliding the slide rail all the way to the bottom can be made to prevent the production of abnormal sounds.

### BRIEF DESCRIPTION OF THE DRAWINGS

FIG. 1 is a perspective view showing a seat rail and an electric drive mechanism of the seat rail of this disclosure;
FIG. 2 is a partial perspective view of FIG. 1;
FIG. 3 is a partial exploded view of FIG. 1;
FIG. 4 is an exploded view showing a bumper and a rear frame of this disclosure;
FIG. 5 is a cross-sectional view of FIG. 1;
FIG. 6 is a partial blowup view of FIG. 5;
FIG. 7 is another cross-sectional view of FIG. 1; and
FIG. 8 is a partial blowup view of FIG. 7.

### DESCRIPTION OF THE PREFERRED EMBODIMENTS

The technical contents of this disclosure will become apparent with the detailed description of preferred embodiments accompanied with the illustration of related drawings as follows. It is intended that the embodiments and drawings disclosed herein are to be considered illustrative rather than restrictive.

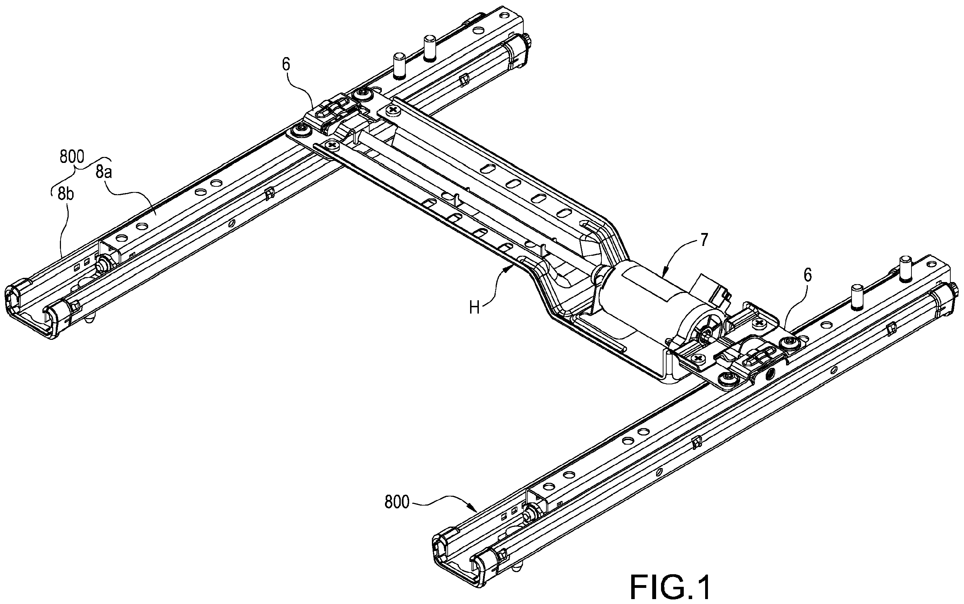

With reference to FIG. 1 for an electric drive mechanism of a seat rail in accordance with an embodiment of this disclosure, the seat rail of this embodiment is an automobile seat rail. The seat rail comprises two parallel slide rails 800 with an interval apart from each other, and each slide rail 800 includes an outer rail 8b fixed to a car body and an inner rail 8a slidably coupled to the outer rail 8b. The driving device 7 drives the inner rail 8a of each slide rail 800 to slide with respect to the outer rail 8b. The seat (not shown in the figure) is fixed onto the inner rail 8a.

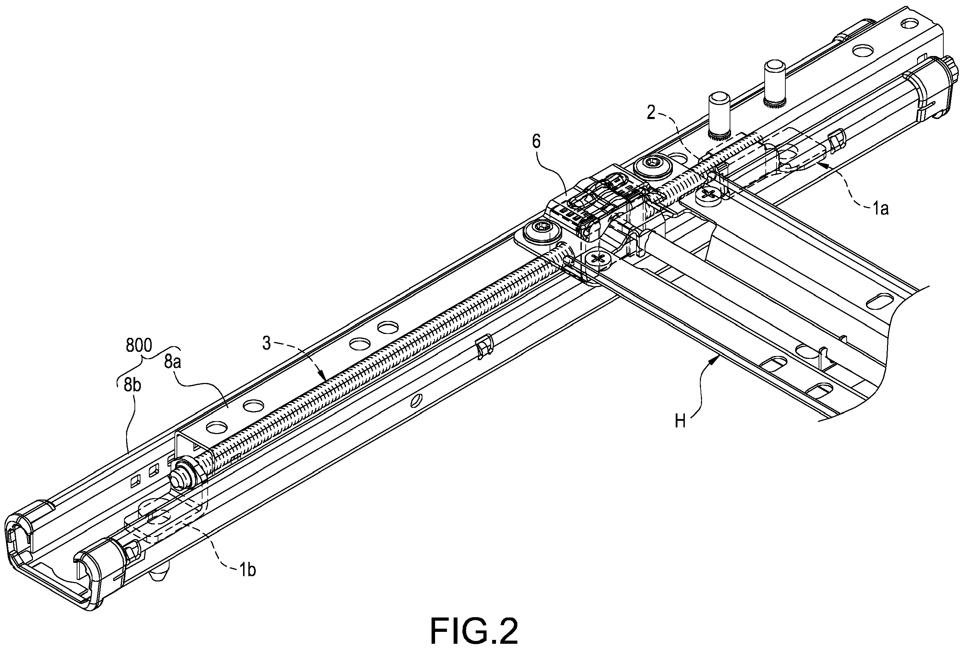

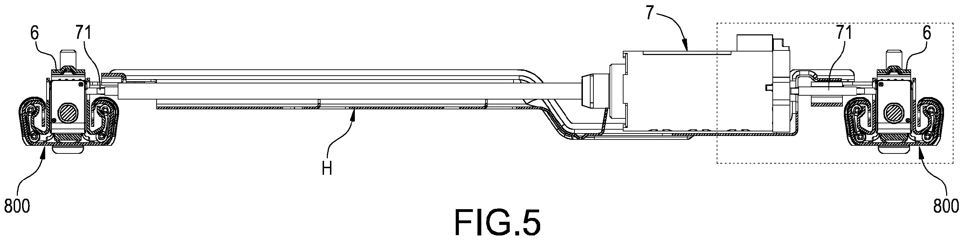

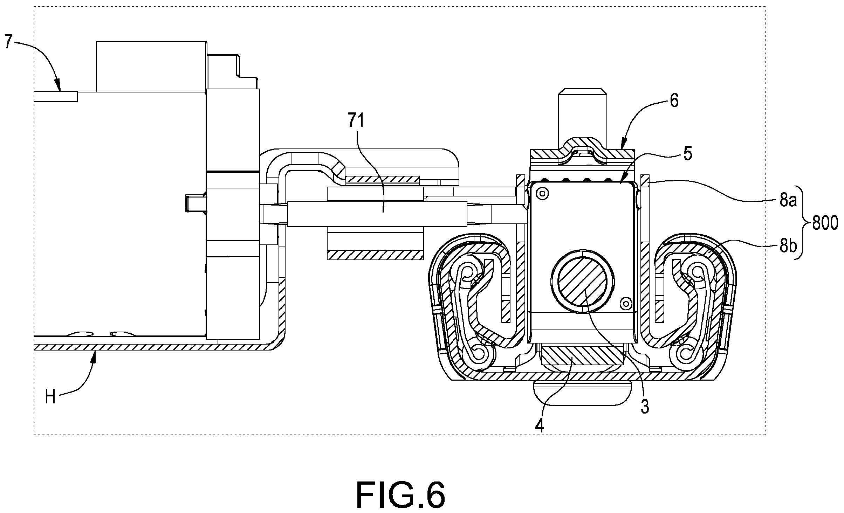

With reference to FIGS. 1 to 3 and 5 to 8 for an electric drive mechanism 100 of this disclosure, the electric drive mechanism 100 comprises: a front frame 1b, a rear frame 1a, a bumper 2, a lead screw 3 and a gear assembly 5, and preferably further comprises a mount 4, a plurality of fixing frames 6 and a connection frame H.

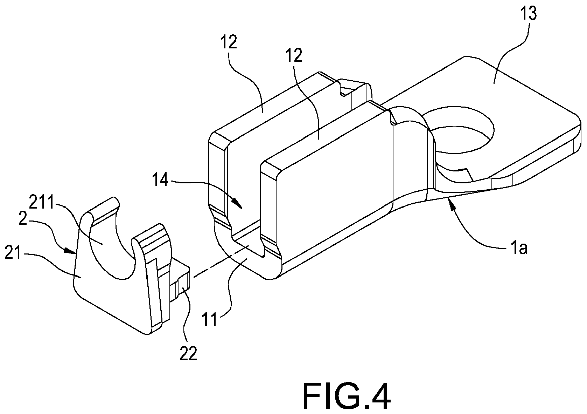

The front frame 1b and the rear frame 1a are disposed with an interval apart from each other and fixed to an inner bottom wall of the outer rail 8b. In FIG. 4, the rear frame 1a preferably comprises a bottom plate 11 and two parallel sidewalls 12 coupled to both sides of the bottom plate 11 respectively, so as to form a substantially U-shaped structure. In addition, the rear frame 1a further comprises a fixing plate 13, and the rear frame 1a is fixed to the outer rail 8b by the fixing plate 13. Wherein, the fixing plate 13 may further be coupled to the two sidewalls 12 in addition to its connection with the bottom plate 11 to provide a better structural strength.

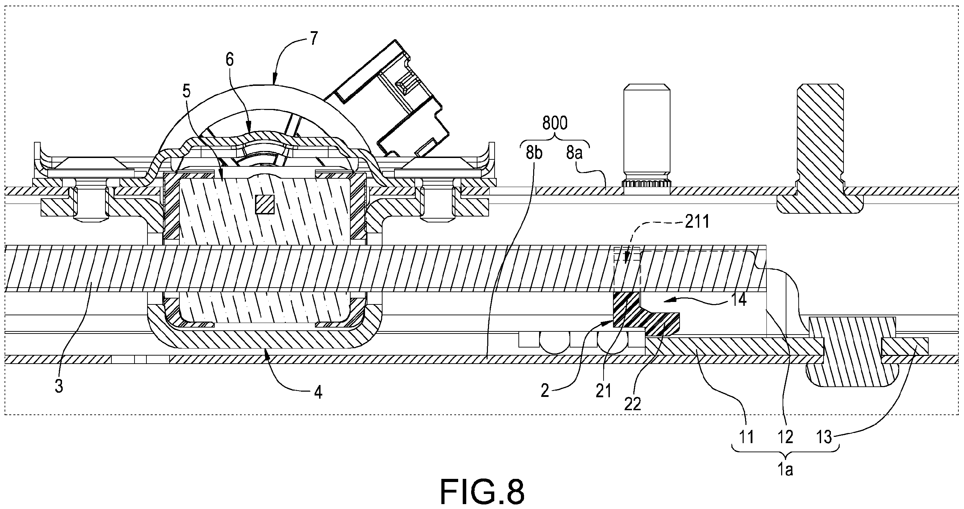

The lead screw 3 is fixed and spanned between the front frame 1b and the rear frame 1a. To prevent the lead screw 3 from rotating with respect to the rear frame 1a, the lead screw 3 is clamped between the two sidewalls 12. In this embodiment, the lead screw 3 has a non-circular section 31 (for example, at least one cross-section is formed at the outer periphery of the lead screw 3). Therefore, the two sidewalls 12 of the rear frame 1a can be clamped at the non-circular section 31 of the lead screw 3. Particularly, a planar inner wall of the sidewall 12 is clamped at a planar outer cross-section of the non-circular section 31 to prevent the lead screw 3 from rotating with respect to the rear frame 1a. It is noteworthy that a plugging space 14 is formed among the bottom plate 11, two sidewalls 12 and the lead screw 3 (as shown in FIG. 8).

The gear assembly 5 is fixed to an inner top wall of the inner rail 8a and driven by the driving device 7. Specifically, a driving rod 71 of the driving device 7 is plugged into a first plug hole 51 of the gear assembly 5, and the driving rod 71 is used for driving the gear assembly 5. The gear assembly 5 is screwed to the lead screw 3 and capable of moving with respect to the lead screw 3. Specifically, the lead screw 3 is plugged into a second plug hole 52 of the gear assembly 5, so that the gear assembly 5 is engaged to the lead screw 3, and the gear assembly 5 can be driven to move with respect to the lead screw 3. Preferably, the gear assembly 5 has the mount 4, and the gear assembly 5 is fixed to an inner top wall of the inner rail 8a by the mount 4.

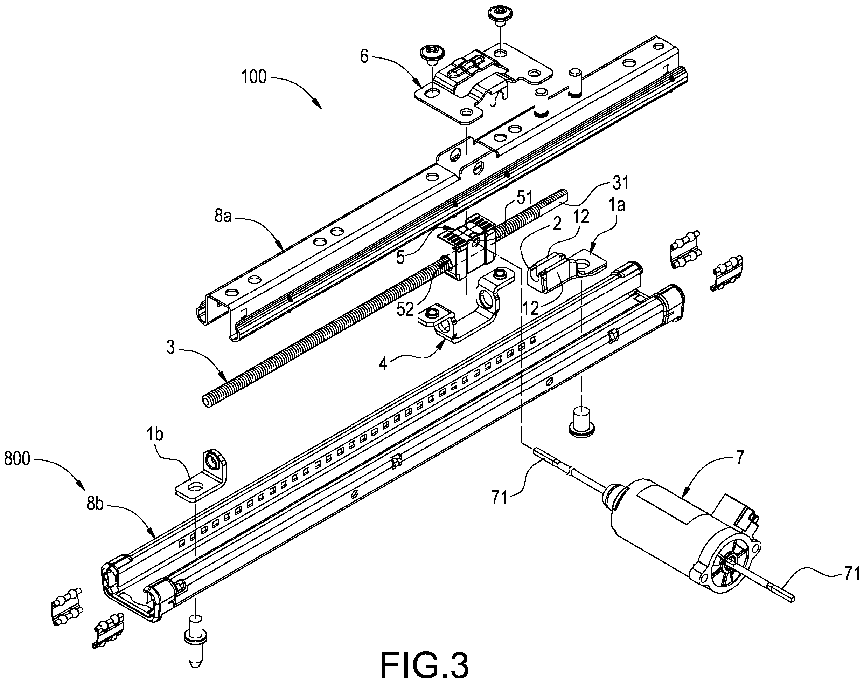

In FIGS. 3 and 8, the gear assembly 5 may comprise a gear assembly body (not labeled in the figure) and a mount 4, wherein the gear assembly body is fixed into the mount 4. In another embodiment, the gear assembly body may have the mount 4 protruding therefrom.

The bumper 2 is installed at the rear frame 1a or the gear assembly 5, and this disclosure is not limited to the aforementioned arrangements. In this embodiment, the bumper 2 is installed at the rear frame 1a. The bumper 2 is made of a buffer material, but this disclosure is not limited by such material only. In this embodiment, the bumper 2 is made of rubber.

In FIGS. 4 and 8, the bumper 5 preferably comprises a buffer body 21 with a purlicue 211, and the bumper 2 is clamped at the lead screw 3 by the purlicue 211, so that the clamped bumper 2 can be situated at any position between the gear assembly 5 and the rear frame 1a (for example, the clamped bumper 2 abuts against the rear frame 1a or the gear assembly 5) to facilitate the buffering operation. The bumper 5 may also comprise a buffer body 21 and a convex body 22, wherein the convex body 22 is protruded from the buffer body 21, so that the bumper 2 can be plugged into the plugging space 14 by the convex body 22 in order to fix the bumper 2 to the rear frame 1a. In the meantime, the buffer body 21 can be situated between the gear assembly 5 and the rear frame 1a to facilitate the buffering operation. Of course, the bumper 2 preferably has both purlicue 211 and convex body 22 to provide the best fixing effect and prevent the bumper 2 from falling off from the rear frame 1a.

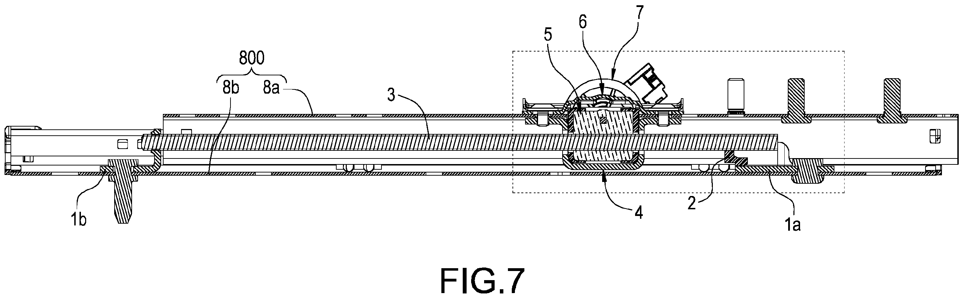

In FIGS. 7 and 8, when a user adjusts the seat and moves the gear assembly 5 all the way to the bottom towards the rear of the car, the gear assembly 5 originally would hit the rear frame 1a directly to produce a knocking sound will hit the buffer body 21 of the bumper 2 instead, since the bumper 2 exists between the gear assembly 5 and the rear frame 1a. Therefore, no abnormal sound will be produced. In short, the electric drive mechanism 100 of this disclosure can effectively prevent the gear assembly 5 from hitting the rear frame 1a directly, and thus having the function of preventing the production of abnormal sounds.

In FIGS. 1, 5 and 6, the two fixing frames 6 are fixed onto the inner rails 8a of the two slide rails 800 respectively, and the connection frame H is detachably spanned between the two fixing frames 6, and the driving device 7 is fixed to the connection frame H. When it is necessary to perform a strength test of the slide rail 800, the connection frame H together with the driving device 7a can be removed easily. In other words, the driving device 7 and the connection frame H are modularized, and users simply need to remove the connection frame H from the two fixing frames 6, such that the whole module together with the driving device 7a can be removed without the need of removing the driving component (such as a motor), a driving shaft (such as a motor shaft) and a carrier frame (such as a frame for mounting the motor) and related components one by one. Therefore, this disclosure has a quick installation/removal effect.

In summation of the description above, this disclosure can surely achieve the expected effects and overcome the drawbacks of the prior art, and this disclosure also complies with patent application requirements, and thus is duly filed for patent application.

## Claims

1. An electric drive mechanism of a seat rail, installed between an inner rail (8a) and an outer rail (8b) of a slide rail (800) and driven by a driving device (7), and the electric drive mechanism (100) comprising:
a front frame (1b) and a rear frame (1a), disposed apart from each other and fixed to the outer rail (8b);
a lead screw (3), fixed and spanned between the front frame (1b) and the rear frame (1a);
a gear assembly (5), fixed to the inner rail (8a) and driven by the driving device (7), and engaged to the lead screw (3); and
a bumper (2), selectively installed at one of the gear assembly (5) and the rear frame (1a);
wherein, the bumper (2) buffers between the gear assembly (5) and the rear frame (1a) to prevent the production of abnormal sounds.

2. The electric drive mechanism of a seat rail according to claim 1, wherein the bumper (2) has a purlicue (211), and the bumper (2) is clamped at the lead screw (3) by the purlicue (211) and disposed between the gear assembly (5) and the rear frame (1a).

3. The electric drive mechanism of a seat rail according to claim 1 or 2, wherein the bumper (2) has a convex body (22), and the rear frame (1a) has a plugging space (14) formed therein, and the bumper (2) is plugged into the plugging space (14) of the convex body (22) and fixed to the rear frame (1a).

4. The electric drive mechanism of a seat rail according to claim 3, wherein the rear frame (1a) comprises a bottom plate (11) and two parallel sidewalls (12) coupled to both sides of the bottom plate (11) respectively, and the lead screw (3) is clamped between the two sidewalls (12), and the plugging space (14) is formed among the bottom plate (11), the two sidewalls (12), and the lead screw (3).

5. The electric drive mechanism of a seat rail according to claim 4, wherein the lead screw (3) has a non-circular section (31), and the lead screw (3) is clamped by the two sidewalls (12) by the non-circular section (31) and unable to rotate with respect to the rear frame (1a).

6. The electric drive mechanism of a seat rail according to claim 4, wherein the rear frame (1a) further comprises a fixing plate (13), and the fixing plate (13) is at least coupled to the bottom plate (11), and the rear frame (1a) is fixed to the outer rail by the fixing plate.

7. The electric drive mechanism of a seat rail according to claim 3, wherein the bumper further comprises a buffer body (21), and the convex body (22) is protruded from the buffer body (21).

8. The electric drive mechanism of a seat rail according to claim 1, further comprising a connection frame (H) and two fixing frames (6), and the two fixing frames (6) being fixed to the inner rail (8a) of the two slide rails (800), and the connection frame (H) is detachably spanned between the two fixing frames (6), and the connection frame (H) is fixed to the driving device (7).

9. The electric drive mechanism of a seat rail according to claim 1, wherein the gear assembly (5) has a mount (4), and the gear assembly (5) is fixed to the inner rail (8a) by the mount (4).
